# EUROPEAN PATENT SPECIFICATION

(11) **EP 4 577 378 B1**
(45) Date of publication and mention of the grant of the patent: **08.04.2026**
(21) Application number: 23773344.9
(22) Date of filing: 25.08.2023
(51) Int. Cl.: B28D 7/00, C03B 33/033, B23Q 7/04, B24B 9/00, B24B 41/00, B24B 41/02, B24B 41/06, C03B 33/02, B28D 7/04, B24B 9/10

(54) **DEVICE AND RELATED METHOD FOR HOLDING A SLAB**
VORRICHTUNG UND VERFAHREN ZUM HALTEN EINER PLATTE
DISPOSITIF ET PROCEDE ASSOCIE POUR MAINTIEN D'UNE DALLE

(30) Priority: 25.08.2022 IT 202200017652
(43) Date of publication of application: 02.07.2025
(73) Proprietor: Forel Spa, 31056 Roncade (TV) (IT)
(72) Inventor: VIANELLO, Fortunato, 31056 Roncade (TV) (IT); VIANELLO, Riccardo, 31056 Roncade (TV) (IT)
(74) Representative: Petraz, Davide Luigi
(86) International application number: PCT/IT2023/050198
(87) International publication number: WO 2024/042559

(56) References cited:
- EP-A1- 3 106 275
- EP-A1- 3 170 622
- CN-A- 111 882 991
- US-A- 4 716 686

## Description

### FIELD OF THE INVENTION

The present invention concerns a holding unit for peripherally holding a sheet, made of glass or other substitute materials for glass, in particular during the working of its peripheral edge, as well as the relative holding method. Such a unit is normally inserted in an apparatus for working sheets.

### BACKGROUND OF THE INVENTION

Apparatuses are known for working sheets of pre-cut glass in various shapes - rectangular, triangular, trapezoidal, etc. - which subsequently undergo further work, usually by removal of material, to make a finished or semi-finished product.

The known apparatuses normally comprise one or more sheet movement units and at least one fixed work unit having a work head, slidable along a substantially vertical direction, provided with one or more tools.

Such apparatuses also comprise a holding unit provided with a stabilizer device, which is angularly adjustable, attached to the work head and capable of temporarily coupling with the peripheral edge of the sheet to stabilize its position and avoid unwanted and harmful vibrations.

The stabilizer device comprises a pair of jaws or gripping members, on which idle wheels, or other holding elements, are mounted, having a closing/opening movement so that the wheels can hold the sheet.

One of the main problems affecting the known stabilizer devices is that it is very difficult to implement predetermined and optimal thrust and calibration values on the sheet. In fact, surface irregularities and a variable thickness value, i.e., non-regular, of the sheet can determine imbalances in the thrust which the gripping members exert on the sheet itself.

In addition to reducing the life of the tools, this also results in poor quality of the finished product in terms of: non-compliance with dimensional tolerances; mediocre or unacceptable surface finish; damage to any nanotechnological coating; sometimes breakage of the sheet during the work, especially in the case of reduced thicknesses; sometimes damage to parts of the apparatus.

A traditional machine for working the peripheral edge of sheets is described in EP 3 170 622 A1. Additional solutions which teach to hold a sheet are described in prior art documents US 4 716 686 A, EP 3 106 275 A1 and CN 111 882 991 A.

There is therefore a need to perfect a unit and relative method for holding a sheet which can overcome at least one of the disadvantages of the prior art.

One purpose of the present invention, which corresponds to the technical problem to be solved, is to provide a unit and relative method for holding a sheet during its working which is capable of ensuring the correct and uniform holding thereof, even in the case of thickness variations or the presence of surface irregularities, without affecting the quality of the finished product.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem in a new and original way, also achieving considerable advantages compared to the state of the prior art, a holding unit for holding a sheet according to the present invention comprises:
- a stabilizer device provided with gripping members of which at least one is mobile with respect to the other along an axis of grip and release in order to hold said sheet;
- a drive unit comprising an actuator associated with the mobile gripping member and a feed circuit configured to feed said actuator.

In accordance with one aspect of the present invention, said feed circuit comprises:
- a delivery line and a return line which are fluidically connected to said actuator;
- a first solenoid valve for the control of said delivery and return lines, wherein said delivery line is configured to feed said actuator with an advantageously incompressible liquid;
- additional solenoid valves, a first thereof positioned on said delivery line and a second one on said return line between said first solenoid valve and said actuator.

Here and in the following description, the term "incompressible liquid" is intended as a fluid provided with low or very low compressibility, such as a hydraulic oil. In its elementary expression, compressibility expresses the variation of the unit volume of liquid caused by a unit increase in pressure. Therefore, incompressible liquid is intended as a liquid having a compressibility value less than about 1% (expressed as a percentage change in volume at 25°C for a pressure change of 100 bar).

The holding unit thus configured allows to ensure the optimal holding of the sheet even in the event of changes in thickness or the presence of surface irregularities. In fact, once a sheet holding position has been reached, the closure of the feed circuit by means of the additional valves allows to isolate the part of the circuit on the actuator side. The latter remains locked in position because the liquid with which it is fed, for example oil, being an incompressible fluid, completely filling such a part of the circuit as well as the actuator chambers, allows the actuator stem to be kept in place regardless of the stresses which the contact with the surface of the sheet could cause due to thickness variations or irregularities.

In accordance with another aspect of the present invention, said delivery line and said return line can be fluidically connected, on the opposite side with respect to the connection side with said actuator, to compressed air and discharge lines.

In accordance with another aspect of the present invention, said first solenoid valve is advantageously pneumatic, for the pneumatic control of said delivery and return lines.

In accordance with another aspect of the present invention, a fluid comprising a liquid and a gas can be fed into said delivery line and said return line. Said liquid can be hydraulic oil while said gas can be air.

In accordance with another aspect of the present invention, said feed circuit can comprise air-oil separator devices, a first positioned on said delivery line and a second on said return line between said actuator and said first solenoid valve.

In accordance with another aspect of the present invention, said feed circuit comprises a pressure regulator disposed on said delivery line between said first solenoid valve and the corresponding air-oil separator.

In accordance with another aspect of the present invention, said additional solenoid valves are oleodynamic and are positioned between said air-oil separator devices and said actuator.

In accordance with an embodiment variant of the present invention, only one liquid can be fed into said delivery line, and only one gas can be fed into said return line.

In accordance with another aspect of the present invention, said holding unit can further comprise at least one control sensor associated with one or both of said gripping members and configured to measure a control parameter of the movement of one or both of said gripping members.

In accordance with another aspect of the present invention, said control sensor is a displacement sensor configured to detect the distance between said gripping members.

According to a variant, said control sensor can be a vibration sensor configured to detect the vibrational status of one or both of said gripping members in terms of speed and/or acceleration.

In accordance with another aspect of the present invention, said control sensor is attached to the mobile gripping member.

In accordance with another aspect of the present invention, said holding unit comprises a controller operatively connected to at least said first solenoid valve and said additional solenoid valves for their selective opening/closing, to said pressure regulator and to said at least one control sensor.

In accordance with another aspect of the present invention, said controller is configured to control said pressure regulator in feedback, to work a subsequent sheet, at least on the basis of a signal received from said at least one control sensor.

Embodiments of the present invention also refer to a method for holding said sheet by reciprocally moving said gripping members along said axis of grip and release, wherein at least one of said gripping members is actuated by said actuator which is of the hydraulic type and is fed by said feed circuit with an advantageously incompressible liquid, in particular oil.

In accordance with an aspect of the present invention, once the level corresponding to said thickness has been reached with a predetermined thrust value of at least one of said gripping members, said drive circuit is switched from open to closed by means of said additional oleodynamic solenoid valves so as to keep at least a part of said drive circuit, including said actuator, completely invaded by said liquid, stabilizing the reciprocal position of said gripping members.

In accordance with another aspect of the present invention, the method provides to measure a control parameter of the movement of one or both of said gripping members by means of at least one control sensor associated with one or both of said gripping members.

In accordance with another aspect of the present invention, the method provides to control the movement of one or both of said gripping members by means of a controller operatively connected at least to said first solenoid valve and to said additional solenoid valves for their selective opening/closing, to a pressure regulator of said feed circuit and to said at least one control sensor.

In accordance with another aspect of the present invention, said controller controls said pressure regulator in feedback, to work a subsequent sheet, at least on the basis of a signal received from said at least one control sensor.

In accordance with another aspect of the present invention, the liquid fed into said drive circuit is contained in air-oil separators.

### DESCRIPTION OF THE DRAWINGS

These and other aspects, characteristics and advantages of the present invention will become apparent from the following description of some embodiments, given as a non-restrictive example with reference to the attached drawings wherein:
- figure 1 is a schematic view of an apparatus for working sheets which comprises a holding unit, according to the present invention;
- figure 2 is a schematic view of a holding unit, according to the present invention.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

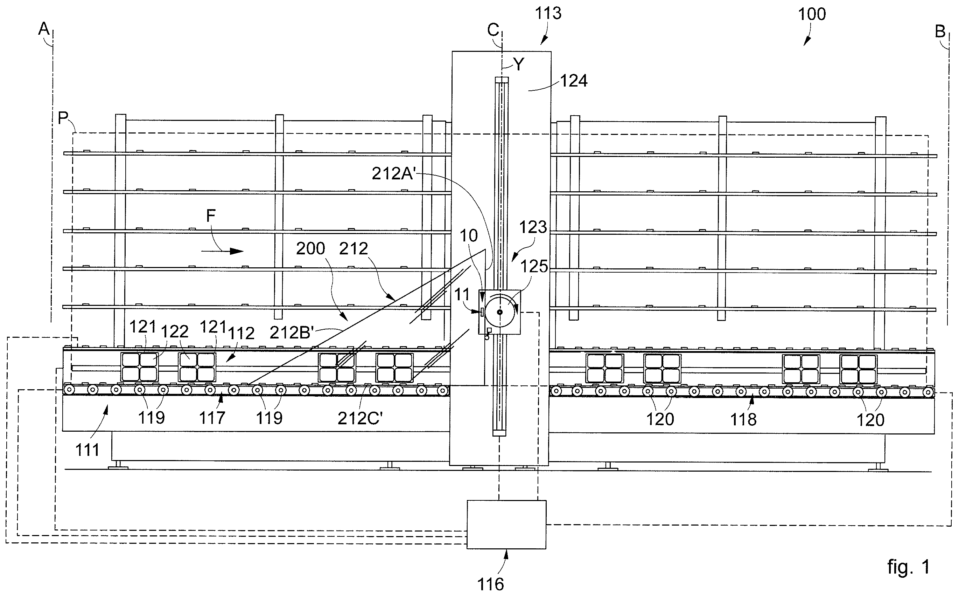

With reference to figure 1, an apparatus 100 according to the present invention is shown, configured to perform material removal work on sheets 200 made of glass or more generally of a brittle material behaving similar to glass.

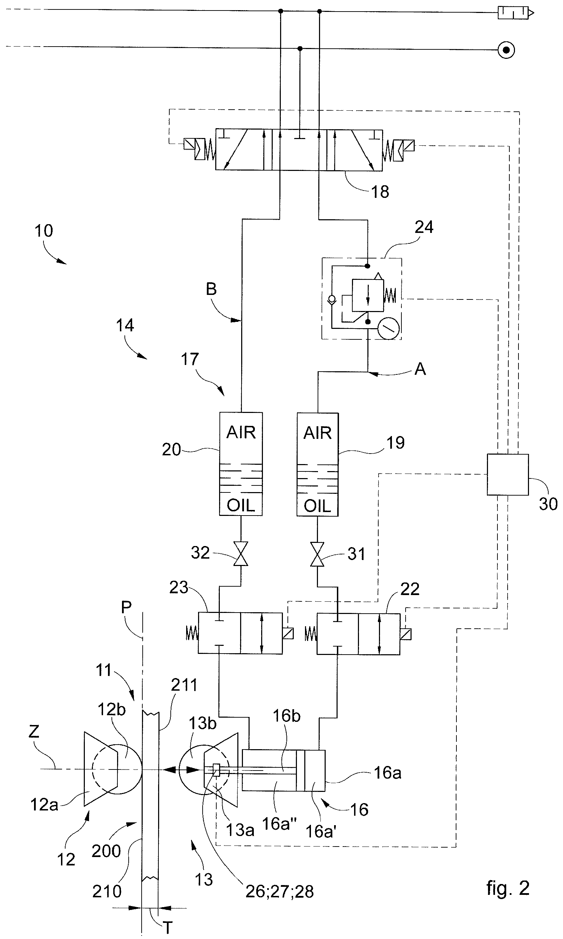

With reference to figures 1 and 2, each sheet 200 has a first front, or side, surface 210, an opposite second side, or rear, surface 211, and a peripheral edge 212 having a previously known or measured thickness T (Figure 2). The side surfaces 210,211 are essentially flat and can have a rectangular, circular, elliptical, curvilinear, trapezoidal, triangular, polygonal shape, or a combination thereof.

For example, as can be seen in figure 1, in the case of a triangular sheet, the peripheral edge 212 can be defined by a front side 212A', an opposite rear side 212B' and a lower side 212C'.

According to embodiments, the apparatus 100 comprises an inlet section A, for one or more sheets 200 to be worked, and an outlet section B, at which the processed sheets 200 are evacuated from the apparatus 100.

The apparatus 100 comprises a work surface P, exemplarily depicted in fig. 1 with a dashed line, substantially vertical and on which the sheets 200 are resting with respect to the side surface 210.

The apparatus 100 comprises a first movement unit 111, for example of the roller type 119, 120, comprising an inlet conveyor 117 and an outlet conveyor 118, configured to move one or more of the aforesaid sheets 200 on the work plane P in a direction of advance F, which goes from the inlet section A to the outlet section B, supporting it and dragging it below.

The apparatus 100 comprises a second movement unit 112 of the carriage type 121 with suction cups 122 configured to hold and move the sheet 200 on the work plane P in the direction of advance F, dragging it laterally, i.e., with respect to its first side surface 210, i.e., the front one, or more advantageously with respect to its second side surface 211, i.e., the rear one.

The first and the second movement unit 111, 112 can be activated simultaneously to cooperate in the movement of the same sheet 200, or can be activated independently.

The apparatus 100 comprises at least one work unit 113 having a vertical or inclined configuration, substantially parallel to the work plane P and being disposed at an intermediate section C which is positioned between the inlet section A and the outlet section B.

The work unit 113 comprises a work head 123 and a guide 124 which extends along a work axis Y and along which the work head 123 is slidable.

The work unit 113 comprises a work tool 125 associated with the work head 123. The work tool 125 is keyed onto a mandrel associated with the work head 123, in a manner known per se.

In the embodiment disclosed herein, the work tool 125 is a grinding wheel. However, it is not excluded that the work tool 125 is configured to carry out other work operations.

With particular reference to figure 2, the apparatus 100 also comprises a holding unit 10 for holding the peripheral edge 212 of the sheet 200 during its processing. Some components of the holding unit 10 are associated with the work unit 113, as will be described in more detail in the following.

The apparatus 100 includes a central control unit 116 configured at least to manage the first movement unit 111, the second movement unit 112, and the work unit 113 including the work head 123 with the work tool 125 and the holding unit 10 in order to ensure the execution of optimized work on the sheet 200.

The holding unit 10, according to the present invention, comprises a stabilizer device 11 (figures 1 and 2) associated with the work head 123 and provided with first gripping members 12 and second gripping members 13 opposite and facing each other, and configured to hold the sheet 200 at its peripheral edge 212 therebetween, and in the vicinity of the work tool 125, stabilizing the position thereof so as to avoid vibrations during the work.

The stabilizer device 11 can be oriented according to a certain orientation angle. The rotation of the orientation angle is functional to correctly orienting the first and the second gripping members 12, 13 with respect to the sheet 200.

The first and second gripping members 12, 13 comprise a respective support element 12a, 13a which can be for example a jaw, and at least one respective contact element 12b, 13b, which in this case is a wheel or an idle roller with an axis orthogonal to the rotation axis of the work tool 125. The contact elements 12b, 13b preferably have a cylindrical shape and a peripheral coating made of a resilient elastic material.

The contact elements 12b, 13b are configured to slidably hold the sheet 200, contacting it in at least two respective contact zones lying on the first and second side surfaces 210, 211. In a more general sense, such contact zones can correspond to respective contact areas, which are rectangular or of other shapes, more or less extensive depending on the degree of deformability of which the contact elements 12b, 13b or their coating are constituted.

The first and the second gripping members 12, 13 are, in use, respectively on one side and on the other of the sheet 200 and at least one of them is selectively mobile along an axis of grip and release Z, orthogonal to the side surfaces 210, 211, according to a suitably calibrated relative approaching/distancing movement.

In the example of fig. 2, the second gripping member 13 is mobile while the first gripping member is fixed.

The holding unit 10 comprises a drive unit 14 operatively connected to the stabilizer device 11 to determine the movement of one or both of the gripping members 12, 13 along the axis of grip and release Z.

The drive unit 14 comprises an actuator 16 associated with the mobile gripping member 13, 12 and a feed circuit 17 configured to feed the actuator 16.

The actuator 16 is, in particular, a hydraulic cylinder, in particular oleodynamic.

The actuator 16 is of the double-acting type.

The actuator 16 comprises a jacket 16a and a mobile plunger 16b within the jacket 16a. The mobile plunger 16b is connected to the mobile gripping member 13, 12 and separates the inside of the jacket into two compartments of variable volume, a first compartment 16a', called "positive compartment", and a second compartment 16a", called "negative compartment".

The feed circuit 17 comprises a delivery line A and a return line B fluidically connected on one side to the actuator 16 and on the opposite side to a compressed air line and an air discharge line. From the actuator 16 side, the delivery line A is fluidically connected to the first compartment 16a' while the return line B is fluidically connected to the second compartment 16b'.

The feed circuit 17 comprises a first pneumatic solenoid valve 18 positioned on the delivery line A and on the return line B between the actuator 16 and the compressed air and discharge lines, and two air-oil separator devices 19, 20, the first positioned on the delivery line A and the second on the return line B between the actuator 16 and the first solenoid valve 18.

The air-oil separator devices 19, 20 are, in fact, two tanks in which there is the amount of liquid, for example oil, necessary for the operation of the actuator 16. The air present therein is managed under pressure to move the oil towards the actuator 16.

According to a variant, the first solenoid valve 18 can be replaced by two separate solenoid valves positioned one on the delivery line A and the other on the return line B.

The feed circuit 17 further comprises two additional oleodynamic solenoid valves 22, 23, the first positioned on the delivery line A and the second on the return line B between the respective air-oil separator devices 19, 20 and the actuator 16. The section of delivery line A and return line B comprised between the two additional solenoid valves 22, 23 and the actuator 16, including the two compartments 16a', 16a", are favourably completely filled with only oil, at least during the holding of the sheet 200, this in order to maintain a stable holding of the sheet 200 since the oil is a fluid which is incompressible or otherwise characterized by low or very low compressibility.

In the example of fig. 2, the first solenoid valve 18 is a 5/3 open-centre solenoid valve while the two additional solenoid valves 22, 23 are 2/2 normally closed monostable solenoid valves.

The solenoid valves 22, 23 are normally in a closed position and are selectively brought, in particular simultaneously, into an open position.

The feed circuit 17 can further comprise a pressure regulator 24 disposed on the delivery line A between the first solenoid valve 18 and the corresponding air-oil separator 19.

The holding unit 10 can comprise its own controller 30 or can be managed directly by the central control unit 116 of the apparatus 100. Therefore, the controller 30 can coincide with the central control unit 116 or the latter can be two distinct and separate components, but in any case communicatively interconnected with each other for the exchange of information related to the management of the entire process.

In the example of fig. 2, the solenoid valves 18, 22, 23 are operatively connected to the controller 30 which, on the basis of the position of the sheet 200 along the direction of advance F, for example received from the central control unit 116, determines the opening or closing of the gripping members 12, 13.

The pressure regulator 24 is also operatively connected to the controller 30.

The controller 30, based on the thickness T and the type of material of which the sheet 200 is made (resistance to concentrated orthogonal loads), the degree of deformability of the contact elements 12b, 13b or their coating, and the freedom of reciprocal sliding between the contact elements 12b, 13b and the sheet 200, without damaging the possible coating of the sheet 200, sends a signal to the pressure regulator 24 consisting of a desired pressure value. The information listed above can be contained in the central control unit 116 and sent to the controller 30.

The feed circuit 17 can further comprise two manual valves 31, 32 positioned on the delivery line A and return line B between the air-oil separators 19, 20 and the additional solenoid valves 22, 23.

According to the present invention, the drive unit 14 can further comprise at least one measurement sensor 26, 27, 28 disposed on one or both of the gripping members 12, 13 for measuring the position, the speed or the mutual acceleration between the gripping members 12, 13, or with respect to the sheet 200.

Advantageously, the at least one measurement sensor 26, 27, 28 is disposed on the mobile gripping member 13, 12.

The measurement sensor 26, 27, 28 is favourably disposed on the support element 13a, 12a of the mobile gripping member 13, 12.

According to a variant, the measurement sensor 26, 27, 28 can be somehow associated with, or integrated in, the contact elements 12b, 13b.

The at least one measurement sensor 26, 27, 28 can be a position measurement sensor 26 selected from a group comprising a potentiometer, a laser sensor, an inductive LVDT (Linear Variable Differential Transformer) sensor, capable of acquiring a physical magnitude of displacement.

According to another embodiment, the at least one measurement sensor 26, 27, 28 can be a vibration measurement sensor 27, 28 for example it can be an accelerometer, for example of piezoelectric, capacitive, laser, LVDT type, capable of acquiring a physical magnitude of speed and/or acceleration.

The at least one control sensor 26, 27, 28 is operatively connected to the controller 30, or to the central control unit 116, to which it sends a corresponding measurement signal containing the values of the physical magnitude (position, speed, acceleration) acquired.

The controller 30, based on said acquired physical magnitude values, performs a comparison with normality, pre-alarm and alarm intervals stored in its own storage module. Thereby, the controller 30 can command automated interventions, or can suggest the interventions to be performed to an operator, for the correction of control parameters of the feed circuit 17. Said control parameters can be related to degassing operations of the section of the delivery line A or return line B comprised between the air-oil separators 19, 20 and the actuator 16 to eliminate any trapped air bubbles, or to correct the input value of the thickness T of the sheet 200.

The feedback control which the controller 30 can implement thanks to the presence of the control sensors 26, 27, 28 allows to avoid compromising: the quality of the work, which in the case of polishing would be altered by vibrations; the life of the work tools 125, in particular the most wearable ones used for polishing; the productivity of the apparatus 100 and the integrity of the mechanical parts thereof.

The control sensors 26, 27, 28 are also useful in the field of predictive maintenance, since the values detected by them can be used not only for the control of the stabilizer device 11, but also to anticipate the onset of more significant failures, thus allowing significant savings on maintenance costs and improving the productivity of the apparatus 100.

The operation of the holding unit 10 described so far, which corresponds to the method according to the present invention, provides to reciprocally move the gripping members 12, 13 along the axis of grip and release Z. In particular, at least one of the gripping members 12, 13 is driven by the actuator 16 fed by the feed circuit 17 by means of the first solenoid valve 18.

Once the level corresponding to the thickness T of the sheet 200 has been reached with a predetermined thrust value of at least one of the gripping members 12, 13, such a thrust being determined by the setting of the pressure regulator 24, the drive circuit 17 is switched from open to closed by means of the additional solenoid valves 22, 23 so as to keep at least a part of the drive circuit 17, including both compartments 16a', 16a" of the actuator 16, completely filled with oil, stabilizing the reciprocal position of the gripping members.

Operationally for the approach/closure step of the gripping members 12, 13, the additional solenoid valves 22, 23, normally closed, are switched to the open position, while the first solenoid valve 18, with open centres, is also switched to the position to conduct compressed air, at the pressure regulated by the pressure regulator 24, towards the air/oil separator 19 of the delivery line A to drive the actuator 16.

Thereby, the first positive compartment 16a' is filled and the stem 16b of the actuator 16 performs a positive stroke, i.e., approaching the sheet 200 along the axis of grip and release Z, pushing the contact element 13b against the front surface 211 of the sheet 200, with a controlled force value, as it is determined by the setting of the pressure regulator 24.

The value of such a force must sum up: the deformability of the peripheral amount of elastic material of the contact elements 12b, 13b; the ability of the sheet 200 to withstand the load; the freedom of reciprocal sliding between contact elements 12b, 13b and sheets 200, without damaging any coating of the sheet 200.

At the same time, the oil contained in the second compartment 16a" of the actuator 16 returns to the air/oil separator 20 of the return line B and the air in the upper part thereof is discharged through the first solenoid valve 18 into a special air discharge line.

In the condition thus reached, the additional solenoid valves 22, 23, normally closed, but now in the open position, are deactivated, i.e., they return to the normally closed state, thus obtaining that the volume of the circuits between them and the compartments 16a' and 16a" of the actuator 16 are completely invaded by oil alone, which, being incompressible, causes the distance between the contact elements 12b, 13b to be maintained unchanged, i.e., calibrated to the level reached in the closed condition of the solenoid valves 22, 23, and thus ensures the desired retention and guidance of the peripheral edge 212 of the sheet 200 throughout the path defined by the work in progress.

Any modest variations in thickness T of the peripheral edge 212 of the sheet 200, due to the dimensional tolerance thereof regulated by relevant regulations, variations which in any case are around a few tenths of a millimetre, are absorbed by the deformability of the contact elements 12b, 13b or of their coating.

From the reading of the pneumatic/hydraulic diagram of figure 2, the states of the solenoid valves 18, 22, 23 can immediately be identified in the condition of the negative stroke of the actuator 16, i.e., for the distancing/opening step of the gripping members 12, 13.

It is clear that modifications and/or additions of parts may be made to the method for working sheets 200 disclosed herein, without departing from the field and scope of the present invention, as defined by the claims.

It is also clear that, although the present invention has been described with reference to some specific examples, a person of skill in the art shall certainly be able to achieve other equivalent forms of an apparatus and a method for holding and performing work on a sheet, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Holding unit (10) for holding a sheet (200) comprising:
- a stabilizer device (11) provided with gripping members (12, 13) of which at least one is mobile with respect to the other along an axis (Z);
- a drive unit (14) with an actuator (16) associated with the mobile gripping member (12, 13) and fed by a feed circuit (17) **characterized in that** said feed circuit (17) comprises:
- a delivery line (A) and a return line (B) which are fluidically connected to said actuator (16), and a first solenoid valve (18) for controlling said lines (A, B), wherein said delivery line (A) is configured to feed said actuator (16) with a liquid;
- additional solenoid valves (22, 23), a first positioned on said delivery line (A) and a second on said return line (B) between said first solenoid valve (18) and said actuator (16).

2. Holding unit (10) as in claim 1, **characterized in that** said delivery line (A) and said return line (B) are fluidically connected, on the opposite side with respect to the connection side with said actuator (16), to compressed air and discharge lines, **and in that** said first solenoid valve (18) is pneumatic for the pneumatic control of said lines (A, B).

3. Holding unit (10) as in claim 1 or 2, **characterized in that** said feed circuit (17) comprises air-oil separator devices (19, 20), a first positioned on said delivery line (A) and a second on said return line (B) between said actuator (16) and said first solenoid valve (18).

4. Holding unit (10) as in claim 3, **characterized in that** said feed circuit (17) comprises a pressure regulator (24) disposed on said delivery line (A) between said first solenoid valve (18) and the relative air-oil separator (19).

5. Holding unit (10) as in claim 3 or 4, **characterized in that** said additional solenoid valves (22, 23) are oleodynamic and are positioned between said air-oil separator devices (19, 20) and said actuator (16).

6. Holding unit (10) as in any claim hereinbefore, **characterized in that** it comprises at least one control sensor (26, 27, 28) associated with one or both of said gripping members (12, 13) and configured to measure a control parameter of the movement of one or both of said gripping members (12, 13).

7. Holding unit (10) as in claim 6, **characterized in that** said control sensor is a displacement sensor (26) configured to detect the distance between said gripping members (12, 13).

8. Holding unit (10) as in claim 6, **characterized in that** said control sensor is a vibration sensor (27, 28) configured to detect the vibrational status of one or both of said gripping members (12, 13) in terms of speed and/or acceleration.

9. Holding unit (10) as in claim 6, 7 or 8, **characterized in that** said control sensor (26, 27, 28) is attached to the mobile gripping member (12, 13).

10. Holding unit (10) as in claim 6, **characterized in that it** comprises a controller (30) operatively connected at least to said first solenoid valve (18) and to said additional solenoid valves (22, 23) for their selective opening/closing, to said pressure regulator (24) and to said at least one control sensor (26, 27, 28).

11. Holding unit (10) as in claim 10, **characterized in that** said controller (30) is configured to control said pressure regulator (24) in feedback, to work a subsequent sheet (200), at least on the basis of a signal received from said at least one control sensor (26, 27, 28).

12. Apparatus (100) for working sheets (200), comprising:
- movement means (111, 112) configured to move at least one sheet (200) in a direction of advance (F);
- at least one work unit (113) comprising a work head (123) on which at least one work tool (125) is installed, and
- a holding unit (10), as in any claim hereinbefore, in which said stabilizer device (11) is installed on said work head (123).

13. Method for holding a sheet (200) with thickness (T) by reciprocally moving gripping members (12, 13) of a stabilizer device (11) along an axis of grip and release (Z), **characterized in that** at least one of said gripping members (12, 13) is driven by a hydraulic actuator (16) fed by a corresponding feed circuit (17) for feeding a liquid by means of a first solenoid valve (18), reaching the level corresponding to the thickness (T) of said sheet (200) with a predetermined thrust value of at least one of said gripping members (12, 13), said drive circuit (17) is switched from open to closed by means of additional solenoid valves (22, 23) so as to keep at least a part of said feed circuit (17) including said actuator (16) completely invaded by said liquid, stabilizing the reciprocal position of said gripping members (12, 13).

14. Method as in claim 13, **characterized in that** it provides to measure a control parameter of the movement of one or both of said gripping members (12, 13) by means of at least one control sensor (26, 27, 28) associated with one or both of said gripping members (12, 13).

15. Method as in claim 13 or 14, **characterized in that** it provides to control the movement of one or both of said gripping members (12, 13) by means of a controller (30) operatively connected at least to said first solenoid valve (18) and to said additional solenoid valves (22, 23) for their selective opening/closing, to a pressure regulator (24) of said feed circuit (17) and to said at least one control sensor (26, 27, 28).

16. Method as in claim 15, **characterized in that** said controller (30) controls said pressure regulator (24) in feedback, to work a subsequent sheet (200), at least on the basis of a signal received from said at least one control sensor (26, 27, 28).

## Patentansprüche

1. Halteeinheit (10) zum Halten eines Blatts (200), aufweisend:
- eine Stabilisierungsvorrichtung (11), die mit Greifelementen (12, 13) versehen ist, von denen mindestens eines in Bezug auf das andere entlang einer Achse (Z) bewegbar;
- eine Antriebseinheit (14) mit einem Aktuator (16), der mit dem bewegbaren Greifelement (12, 13) verbunden ist und von einem Zuführkreis (17) gespeist wird, **dadurch gekennzeichnet, dass** der Zuführkreis (17) aufweist:
- eine Zuführleitung (A) und eine Rückführleitung (B), die mit dem Aktuator (16) fluidverbunden sind, und ein erstes Magnetventil (18) zum Steuern der Leitungen (A, B), wobei die Zuführleitung (A) konfiguriert ist, um den Aktuator (16) mit einer Flüssigkeit zu speisen;
- zusätzliche Magnetventile (22, 23), wobei ein erstes in der Zuführleitung (A) und ein zweites in der Rückführleitung (B) zwischen dem ersten Magnetventil (18) und dem Aktuator (16) positioniert sind.

2. Halteeinheit (10) nach Anspruch 1, **dadurch gekennzeichnet, dass** die Zuführleitung (A) und die Rückführleitung (B) auf der bezüglich der Verbindungsseite mit dem Aktuator (16) gegenüberliegenden Seite mit Druckluft- und Abführleitungen verbunden sind, **und dass** das erste Magnetventil (18) pneumatisch ist zur pneumatischen Steuerung der Leitungen (A, B).

3. Halteeinheit (10) nach Anspruch 1 oder 2, **dadurch gekennzeichnet, dass** der Zuführkreis (17) Luft-Öl-Abscheidevorrichtungen (19, 20) aufweist, wobei eine erste in der Zuführleitung (A) und eine zweite in der Rückführleitung (B) zwischen dem Aktuator (16) und dem ersten Magnetventil (18) angeordnet sind.

4. Halteeinheit (10) nach Anspruch 3, **dadurch gekennzeichnet, dass** der Zufuhrkreis (17) einen Druckregler (24) aufweist, der in der Zufuhrleitung (A) zwischen dem ersten Magnetventil (18) und der zugeordneten Luft-Öl-Abscheidevorrichtung (19) angeordnet ist.

5. Halteeinheit (10) nach Anspruch 3 oder 4, **dadurch gekennzeichnet, dass** die zusätzlichen Magnetventile (22, 23) oleodynamisch sind und zwischen den Luft-Öl-Abscheidevorrichtungen (19, 20) und dem Aktuator (16) angeordnet sind.

6. Halteeinheit (10) gemäß irgendeinem vorstehenden Anspruch, **dadurch gekennzeichnet, dass** sie mindestens einen Steuersensor (26, 27, 28) aufweist, der einem oder beiden Greifelementen (12, 13) zugeordnet und so konfiguriert ist, dass er einen Steuerparameter der Bewegung eines oder beider Greifelemente (12, 13) misst.

7. Halteeinheit (10) nach Anspruch 6, **dadurch gekennzeichnet, dass** der Steuersensor ein Verlagerungssensor (26) ist, der so konfiguriert ist, dass er den Abstand zwischen den Greifelementen (12, 13) erfasst.

8. Halteeinheit (10) nach Anspruch 6, **dadurch gekennzeichnet, dass** der Steuersensor ein Vibrationssensor (27, 28) ist, der so konfiguriert ist, dass er den Vibrationszustand eines oder beider Greifelemente (12, 13) in Bezug auf Geschwindigkeit und/oder Beschleunigung erfasst.

9. Halteeinheit (10) nach Anspruch 6, 7 oder 8, **dadurch gekennzeichnet, dass** der Steuersensor (26, 27, 28) an dem bewegbaren Greifelement (12, 13) angebracht ist.

10. Halteeinheit (10) nach Anspruch 6, **dadurch gekennzeichnet, dass** sie eine Steuervorrichtung (30) aufweist, die zumindest mit dem ersten Magnetventil (18) und den zusätzlichen Magnetventilen (22, 23) zu deren selektivem Öffnen/Schließen, mit dem Druckregler (24) und mit dem mindestens einen Steuersensor (26, 27, 28) betriebsverbunden ist.

11. Halteeinheit (10) nach Anspruch 10, **dadurch gekennzeichnet, dass** die Steuervorrichtung (30) so konfiguriert ist, dass sie den Druckregler (24) in Rückkopplung steuert, um ein nachfolgendes Blatt (200) zu bearbeiten, zumindest auf der Grundlage eines Signals, das von dem mindestens einen Steuersensor (26, 27, 28) empfangen wird.

12. Vorrichtung (100) zum Bearbeiten von Blättern (200), aufweisend:
- Bewegungsmittel (111, 112), die konfiguriert sind, um mindestens ein Blatt (200) in einer Vorschubrichtung (F) zu bewegen;
- mindestens eine Bearbeitungseinheit (113) mit einem Bearbeitungskopf (123), an dem mindestens ein Bearbeitungswerkzeug (125) angebracht ist, und
- eine Halteeinheit (10) gemäß irgendeinem vorstehenden Anspruch, wobei die Stabilisierungsvorrichtung (11) an dem Bearbeitungskopf (123) angebracht ist.

13. Verfahren zum Halten eines Blattes (200) mit einer Dicke (T) durch Hin- und Herbewegen von Greifelementen (12, 13) einer Stabilisierungsvorrichtung (11) entlang einer Greif- und Freigebeachse (Z), **dadurch gekennzeichnet, dass** mindestens eines der Greifelemente (12, 13) durch einen hydraulischen Aktuator (16) angetrieben wird, der von einem korrespondierenden Zuführkreis (17) gespeist wird, um eine Flüssigkeit mittels eines ersten Magnetventils (18) zuzuführen, wobei das Niveau erreicht wird, das zur Dicke (T) des Blattes (200) korrespondiert, mit einem vorbestimmten Schubwert von mindestens einem der Greifelemente (12, 13), wobei der Zuführkreis (17) mittels zusätzlicher Magnetventile (22, 23) von offen auf geschlossen umgeschaltet wird, um mindestens einen Teil des Zuführkreises (17) einschließlich des Aktuators (16) vollständig mit der Flüssigkeit zu füllen, um dadurch die gegenseitige Position der Greifelemente (12, 13) zu stabilisieren.

14. Verfahren nach Anspruch 13, **dadurch gekennzeichnet, dass** es vorsieht, einen Steuerparameter der Bewegung eines oder beider Greifelemente (12, 13) mittels mindestens eines Steuersensors (26, 27, 28) zu messen, der einem oder beiden Greifelementen (12, 13) zugeordnet ist.

15. Verfahren nach Anspruch 13 oder 14, **dadurch gekennzeichnet, dass** es vorsieht, die Bewegung eines oder beider Greifelemente (12, 13) mittels einer Steuervorrichtung (30) zu steuern, die zumindest mit dem ersten Magnetventil (18) und den zusätzlichen Magnetventilen (22, 23) für deren selektives Öffnen/Schließen, mit einem Druckregler (24) des Zuführkreises (17) und mit dem mindestens einen Steuersensor (26, 27, 28) betriebsverbunden ist.

16. Verfahren nach Anspruch 15, **dadurch gekennzeichnet, dass** die Steuervorrichtung (30) den Druckregler (24) in Rückkopplung steuert, um ein nachfolgendes Blatt (200) zu bearbeiten, zumindest auf der Grundlage eines von dem mindestens einen Steuersensor (26, 27, 28) empfangenen Signals.

## Revendications

1. Unité de maintien (10) pour maintenir une feuille (200) comprenant :
- un dispositif stabilisateur (11) pourvu d'éléments de préhension (12, 13) dont au moins l'un est mobile par rapport à l'autre le long d'un axe (Z) ;
- une unité d'entraînement (14) avec un actionneur (16) associé à l'élément de préhension mobile (12, 13) et alimenté par un circuit d'alimentation (17), **caractérisée en ce que** ledit circuit d'alimentation (17) comprend :
- une conduite d'alimentation (A) et une conduite de retour (B) qui sont connectées fluidiquement audit actionneur (16), et une première électrovanne (18) pour commander lesdites conduites (A, B), dans lequel ladite conduite d'alimentation (A) est configurée pour alimenter ledit actionneur (16) avec un liquide ;
- des électrovannes (22, 23) supplémentaires, une première positionnée sur ladite conduite d'alimentation (A) et une seconde sur ladite conduite de retour (B) entre ladite première électrovanne (18) et ledit actionneur (16).

2. Unité de maintien (10) selon la revendication 1, **caractérisée en ce que** ladite conduite d'alimentation (A) et ladite conduite de retour (B) sont connectées fluidiquement, sur le côté opposé par rapport au côté de connexion avec ledit actionneur (16), à des conduites d'air comprimé et d'alimentation, **et en ce que** ladite première électrovanne (18) est pneumatique pour la commande pneumatique desdites conduites (A, B).

3. Unité de maintien (10) selon la revendication 1 ou 2, **caractérisée en ce que** ledit circuit d'alimentation (17) comprend des dispositifs de séparation air-huile (19, 20), un premier positionné sur ladite conduite d'alimentation (A) et un second sur ladite conduite de retour (B) entre ledit actionneur (16) et ladite première électrovanne (18).

4. Unité de maintien (10) selon la revendication 3, **caractérisée en ce que** ledit circuit d'alimentation (17) comprend un régulateur de pression (24) disposé sur ladite conduite d'alimentation (A) entre ladite première électrovanne (18) et le séparateur air-huile (19) relatif.

5. Unité de maintien (10) selon la revendication 3 ou 4, **caractérisée en ce que** lesdites électrovannes (22, 23) supplémentaires sont oléodynamiques et sont positionnées entre lesdits dispositifs séparateurs air-huile (19, 20) et ledit actionneur (16).

6. Unité de maintien (10) selon l'une quelconque des revendications précédentes, **caractérisée en ce qu'**elle comprend au moins un capteur de commande (26, 27, 28) associé à l'un ou aux deux desdits éléments de préhension (12, 13) et configuré pour mesurer un paramètre de commande du mouvement de l'un ou des deux desdits éléments de préhension (12, 13).

7. Unité de maintien (10) selon la revendication 6, **caractérisée en ce que** ledit capteur de commande est un capteur de déplacement (26) configuré pour détecter la distance entre lesdits éléments de préhension (12, 13).

8. Unité de maintien (10) selon la revendication 6, **caractérisée en ce que** ledit capteur de commande est un capteur de vibrations (27, 28) configuré pour détecter l'état vibratoire de l'un ou des deux desdits éléments de préhension (12, 13) en termes de vitesse et/ou d'accélération.

9. Unité de maintien (10) selon la revendication 6, 7 ou 8, **caractérisée en ce que** ledit capteur de commande (26, 27, 28) est fixé à l'élément de préhension mobile (12, 13).

10. Unité de maintien (10) selon la revendication 6, **caractérisée en ce qu'elle** comprend un dispositif de commande (30) connecté de manière opérationnelle au moins à ladite première électrovanne (18) et auxdites électrovannes (22, 23) supplémentaires pour leur ouverture/fermeture sélective, audit régulateur de pression (24) et audit au moins un capteur de commande (26, 27, 28).

11. Unité de maintien (10) selon la revendication 10, **caractérisée en ce que** ledit dispositif de commande (30) est configuré pour commander ledit régulateur de pression (24) en retour, pour travailler une feuille (200) suivante, au moins sur la base d'un signal reçu dudit au moins un capteur de commande (26, 27, 28).

12. Appareil (100) de travail de feuilles (200), comprenant :
- des moyens de déplacement (111, 112) configurés pour déplacer au moins une feuille (200) dans une direction d'avancement (F) ;
- au moins une unité de travail (113) comprenant une tête de travail (123) sur laquelle au moins un outil de travail (125) est installé, et
- une unité de maintien (10), selon l'une quelconque des revendications précédentes, dans laquelle ledit dispositif stabilisateur (11) est installé sur ladite tête de travail (123).

13. Procédé pour maintenir une feuille (200) d'épaisseur (T) en déplaçant en va-et-vient des éléments de préhension (12, 13) d'un dispositif stabilisateur (11) le long d'un axe de préhension et de libération (Z), **caractérisé en ce qu'**au moins un desdits éléments de préhension (12, 13) est entraîné par un actionneur hydraulique (16) alimenté par un circuit d'alimentation correspondant (17) pour alimenter un liquide au moyen d'une première électrovanne (18), atteignant le niveau correspondant à l'épaisseur (T) de ladite feuille (200) avec une valeur de poussée prédéterminée d'au moins un desdits éléments de préhension (12, 13), ledit circuit d'entraînement (17) est commuté de l'ouverture à la fermeture au moyen d'électrovannes (22, 23) supplémentaires de manière à maintenir au moins une partie dudit circuit d'alimentation (17) comprenant ledit actionneur (16) complètement envahie par ledit liquide, stabilisant la position en va-et-vient desdits éléments de préhension (12, 13).

14. Procédé selon la revendication 13, **caractérisé en ce qu'**il prévoit de mesurer un paramètre de commande du mouvement de l'un ou des deux desdits éléments de préhension (12, 13) au moyen d'au moins un capteur de commande (26, 27, 28) associé à l'un ou aux deux desdits éléments de préhension (12, 13).

15. Procédé selon la revendication 13 ou 14, **caractérisé en ce qu'**il permet de commander le mouvement de l'un ou des deux desdits éléments de préhension (12, 13) au moyen d'un dispositif de commande (30) connecté de manière opérationnelle au moins à ladite première électrovanne (18) et auxdites électrovannes (22, 23) supplémentaires pour leur ouverture/fermeture sélective, à un régulateur de pression (24) dudit circuit d'alimentation (17) et audit au moins un capteur de commande (26, 27, 28).

16. Procédé selon la revendication 15, **caractérisé en ce que** ledit dispositif de commande (30) commande ledit régulateur de pression (24) en retour, pour travailler une feuille (200) suivante, au moins sur la base d'un signal reçu dudit au moins un capteur de commande (26, 27, 28).
